# EUROPEAN PATENT APPLICATION

(11) **EP 1 803 691 A1**
(43) Date of publication of application: **04.07.2007**
(21) Application number: 06119370.2
(22) Date of filing: 23.08.2006
(51) Int. Cl.: C03C 3/076, G01T 1/20

(54) **Glass**

(30) Priority: 31.08.2005 JP 2005250762
(71) Applicant: Ohara Inc., Sagamihara-shi Kanagawa 2291186 (JP)
(72) Inventor: Fu, Jie, Kanagawa-ken (JP)
(74) Representative: Jönsson, Hans-Peter

(57) **Abstract**

A glass or scintillating glass contains, in mol percent on the oxide basis, 0.005 % to 15 % Ce₂O₃, and it contains none of Ga₂O₃ and GeO₂ and has a density of 3.0 g/cm³ or over. More preferably, the glass or scintillating glass further contains F wherein a total amount of F calculated on the assumption that a part or whole of oxides of the glass has been substituted by a fluoride is 1 to 100 mol % to a total amount of components of the glass expressed on the oxide basis.

## Description

The present invention relates to scintillating glasses which emit light efficiently when exposed to radiation, such as X-rays.

Substances that efficiently emit fluorescence in response to excitation by light, heat, radiation, etc. are called "fluorescent substances". Particularly, fluorescence emission in response to radiation, such as X-rays, γ-rays or charged particles, is called "scintillation", and substances that emit scintillation light are called "scintillators".

Today, scintillators are used extensively in medical diagnosis devices, such as X-ray CT devices, PET (Positron Emission Tomography) devices and nondestructive test devices using radiation rays, electromagnetic calorimeters for high-energy physics experiments, etc. Various characteristics, such as a high atomic number, high density, high light yield, high transparency in emission wavelengths, short decay time and high radiation resistance are required for a scintillator used for such purposes.

Of such characteristics or properties, the atomic number and density are very important in that they not only relate to an absorption factor of radiation and contribute to minitualization of a detector using the glass but also enhance the resolution of irradiated positions. In X-ray and PET devices where the radiation energy is relatively low, the absorption factor is proportional to the fourth power of the atomic number, while, in cases where the radiation energy is extremely high, the absorption factor is proportional to the atomic number. In any event, the scintillators are required to have a great atomic number and high density. In addition to the aforementioned characteristics or properties, it is desirable that the scintillator can be manufactured at low cost, formed into a large size and formed into any one of various shapes with ease.

Presently, there are known a great number of inorganic scintillators, such as single crystal, ceramic and glass scintillators. Scintillating glasses are advantageous in that they not only have high transparency but also can be readily formed into any desired shape, such as a fiber shape, although they have lower emission efficiency; thus, scintillating glasses have been under strenuous study. U.S. Patent Nos. 3654172, 5122671 and 5391320, for example, disclose scintillating glasses using Tb as an activator agent. However, these scintillating glasses, each of which is based on alkaline-earth silicate, have low density and thus are considerably limited in application.

In view of the foregoing, it is an object of the present invention to provide an improved scintillating glass which is stable in practical use and achieves both high density and high emission efficiency.

The inventor has come to achieve the present invention by setting a composition of glass components to a particular novel range with a view to providing a dense glass, especially scintillating glass.

Namely, a preferred embodiment of the present invention can be provided by any one of the following arrangements.
(Arrangement 1) A glass or scintillating glass which comprises, in mol percent on an oxide basis, 0.005 % to 15 % Ce₂O₃, and the glass or scintillating glass contains none of Ga₂O₃ and GeO₂ and has a density of 3.0 g/cm³ or over.
(Arrangement 2) A glass as defined in Arrangement 1 which further comprises F wherein a total amount of F calculated on the assumption that a part or whole of oxides of the glass has been substituted by a fluoride is 1 to 100 mol % to a total amount of components of the glass expressed on the oxide basis.
(Arrangement 3) A glass or scintillating glass as defined in Arrangement 1 or 2 which further comprises Gd₂O₃ and/or Lu₂O₃, and wherein a content of at least one of Gd₂O₃ and Lu₂O₃ is 0.1 to 50 mol % on the oxide basis.
(Arrangement 4) A glass or scintillating glass as defined in any one of Arrangements 1 - 3 which further comprises, in mol percent on the oxide basis, 30 % to 70 % (SiO₂ + B₂O₃) and/or 0.1 % to 35 % Al₂O₃.
(Arrangement 5) A glass or scintillating glass as defined in any one of Arrangements 1 - 4 which further comprises 0 to % 10 P₂O₅ in mol % on the oxide basis.
(Arrangement 6) A glass or scintillating glass as defined in any one of Arrangements 1 - 5 which further comprises, in mol percent on the oxide basis, 0 to 30 % (Y₂O₃ + La₂O₃) and/or 0 to 60 % (RO + Rn₂O), and/or 0 to 5 % (As₂O₃ + Sb₂O₃), and/or 0 to 15 % M₂O₃, wherein R is at least one component selected from the group consisting of Mg, Ca, Sr, Ba and Zn, Rn is at least one component selected from the group consisting of Li, Na, K and Cs, and M is at least one component selected from the group consisting of Nd, Pr, Sm, Dy, Ho, Er, Tm, Yb, Mn, Bi and Cr.
(Arrangement 7) A glass or scintillating glass as defined in any one of Arrangements 1 - 6 wherein an attenuation time is 1 µs or below.
(Arrangement 8) A glass or scintillating glass as defined in any one of Arrangements 1 - 7 which emits light in response to excitation by radiation rays and is used as a scintillator.
(Arrangement 9) A radiation meter device which uses the glass or scintillating glass defined in any one of Arrangements 1 - 8.
(Arrangement 10) A CT device which uses the glass or scintillating glass defined in any one of Arrangements 1 - 8.
(Arrangement 11) A glass or scintillating glass making method which comprises: a step of weighing starting materials having the composition defined in any one of Arrangements 1 - 6; a step of melting the starting materials into a glass melt, using a reducing agent; and a step of pouring the glass melt into a mold to thereby form the glass melt to a desired shape.
(Arrangement 12) A glass or scintillating glass making method as defined in Arrangement 11 wherein Sb₂O₃ is used as the reducing agent.
(Arrangement 13) A glass or scintillating glass making method which comprises: a step of weighing starting materials having the composition defined in any one of Arrangements 1 - 6; a step of melting the starting materials into a glass melt in a reducing atmosphere; and a step of pouring the glass melt into a mold to thereby form the glass melt to a desired shape.
   The component compositions of the present invention are expressed in mol percent above, and they may not be suitably defined directly in mass percent representation. However, it should also be noted that the component compositions of the present invention may alternatively be defined, using mass percent representation, and these alternatives can accomplish similar advantageous results to the aforementioned.
(Arrangement 14) A glass or scintillating glass which comprises, in mass percent on the oxide basis, 0.005 % to 20 % Ce₂O₃, and the glass contains none of Ga₂O₃ and GeO₂ and has a density of 3.0 g/cm³ or over.
(Arrangement 15) A glass as defined in Arrangement 14 which further comprises F wherein a total amount of F calculated on the assumption that a part or whole of oxides of the glass has been substituted by a fluoride is 1 to 100 mol % to a total amount of components of the glass expressed on the oxide basis.
(Arrangement 16) A glass or scintillating glass as defined in Arrangement 14 or 15 which further comprises Gd₂O₃ and/or Lu₂O₃, and wherein a content of at least one of Gd₂O₃ and Lu₂O₃ is 0.5 to 90 mass percent on the oxide basis.
(Arrangement 17) A glass or scintillating glass as defined in any one of Arrangements 14 - 16 which further comprises, in mass percent on the oxide basis, 3 % to 60 % (SiO₂ + B₂O₃) and/or 0.1 % to 20 % Al₂O₃.
(Arrangement 18) A glass or scintillating glass as defined in any one of Arrangements 14 - 17 which further comprises 0 to 15 % P₂O₅ in mass percent on the oxide basis.
(Arrangement 19) A glass or scintillating glass as defined in any one of Arrangements 14 - 18 which further comprises, in mass percent on the oxide basis, 0 to 50 % (Y₂O₃ + La₂O₃) and/or 0 to 60 % (RO + Rn₂O), and/or 0 to 5 % (As₂O₃ + Sb₂O₃), and/or 0 to 10 % M₂O₃, wherein R is at least one component selected from the group consisting of Mg, Ca, Sr, Ba and Zn, Rn is at least one component selected from the group consisting of Li, Na, K and Cs, and M is at least one component selected from the group consisting of Nd, Pr, Sm, Dy, Ho, Er, Tm, Yb, Mn, Bi and Cr.

According to the present invention, there can be provided a glass or scintillating glass with a density of 3.0 g/cm³ or over, which is thermally stable against to crystallization and scintillates in response to excitation with X-ray radiation. Further, according a more preferred embodiment of the present invention, there can be provided a glass or scintillating glass having a density of 3.5 g/cm³ or over.

Further, the glass of the present invention can achieve a decay time of 1 µs or below. In this specification, the terms "decay time" are used to refer to a length of time in which light emission intensity of a monitored maximum emission peak wavelength falls to 1/e (36.8 %) after termination of the excitation.

The following will describe embodiments of the present invention, but it should be appreciated that the present invention is not limited to the described embodiments and various modifications of the invention are possible without departing from the basic principles. The scope of the present invention is therefore to be determined solely by the appended claims.

For better understanding of the objects and other features of the present invention, its preferred embodiments will be described hereinbelow in greater detail with reference to the accompanying drawings, in which:
Fig. 1 is a diagram showing emission spectra of Example 1 and Comparative Example 1 when excited with X-ray, where the horizontal axis represents the wavelength (in nm) and the vertical axis represents the emission intensity (in an arbitrary unit);
Fig. 2 is a diagram showing light emission spectra of Example 1 and Example 2 when excited with X-ray radiation, where the horizontal axis represents the wavelength (in nm) and the vertical axis represents the light emission intensity (in an arbitrary unit);
Fig. 3 is a diagram showing light transmittances of Example 1 and Example 3 when excited by X-ray radiation, where the horizontal axis represents the wavelength (in nm) and the vertical axis represents the transmittance;
Fig. 4 is a diagram showing emission spectra of Example 1 and Example 3 when excited with X-ray, where the horizontal axis represents the wavelength (in nm) and the vertical axis represents the light emission intensity (in an arbitrary unit); and
Fig. 5 is a diagram showing emission spectra of Example 1 and Example 4 when excited with X-ray, where the horizontal axis represents the wavelength (in nm) and the vertical axis represents the emission intensity (in an arbitrary unit).

The following paragraphs describe reasons why the composition of the glass of the present invention is limited as set forth above. Unless stated otherwise, contained amounts or contents of individual components of the glass will be represented in mol (or mole) percent on the oxide basis.

SiO₂ and B₂O₃ are glass-forming oxides, which are components useful for providing stable glass. In order to provide more stable glass, the lower limit of the content of at least one of these components, SiO₂ and B₂O₃, is set preferably at 30 %, more preferably at 35 % and most preferably at 40 %. Further, in order for the glass to achieve desired high density, the upper limit of the content of at least one of these components is set preferably at 70 %, more preferably at 65 % and most preferably at 60 %. It is preferable to contain both of the two components, in order to achieve the aforementioned advantages. However, of these two components, B₂O₃ performs a negative function of lowering the emission intensity although it is effective in enhancing the meltability and stability of glass; thus, it is preferable to minimize the content of B₂O₃. Further, the ratio, by mol percent, of SiO₂ to B₂O₃ (SiO₂/B₂O₃) is set preferably at 0.2 or over, more preferably at 0.5 or over, and most preferably at 1.0 or over.

Gd₂O₃ and Lu₂O₃ are components that greatly contribute to enhancement of not only the density but also the light emission of glass and thus greatly contribute to accomplishment of the object of the present invention. Therefore, it is preferable to contain at least one of these two components. If the lower limit of the total content of these two components is less than 0.1 %, it tends to be difficult to achieve the aforementioned advantages to a sufficient degree. Therefore, the lower limit of the content of at least one of these two components is set preferably at 0.1 %, more preferably at 1 % and most preferably at 3 %. Further, if the total content of these two components exceeds 50 %, the stability of the glass tends to greatly lower; thus, the upper limit of the content of at least one of these components is set preferably at 50 %, more preferably at 45 % and most preferably at 40 %.

It is preferable that Lu₂O₃ be added because Lu₂O₃ is effective in enhancing the density of glass. However, adding a great amount of Lu₂O₃ would present a cost problem since the raw material of Lu₂O₃ is costly. Therefore, it is most preferable to contain both of the two components. In the case where both of Gd₂O₃ and Lu₂O₃ are contained, the ratio, by mol percent, of Lu₂O₃ to (Gd₂O₃ + Lu₂O₃) is set preferably at 0.005 or over.

Further, La₂O₃ or Y₂O₃ is a component that is effective in enhancing the stability and density of glass and thus may be added as desired. However, in order to maintain good stability of the glass, the upper limit of the total content of these components is set preferably at 30 %, more preferably at 20 % and most preferably at less than 4 %.

Al₂O₃ is a component effective in enhancing not only the meltability and stability but also the light emission characteristic of glass, which thus greatly contributes to the accomplishment of the object of the present invention. If the content of Al₂O₃ is too small, the aforementioned advantages can hardly be attained to a sufficient degree, while, if the content of Al₂O₃ is too great, the meltability, stability and light emission characteristic of the glass tend to easily lower. The lower limit of the content of this component is set preferably at 0.1 %, more preferably at 0.5 % and most preferably at 1 %, and the upper limit of the content of the component is set preferably at 35 %, more preferably at 30 % and most preferably at 25 %.

Whereas the material of Al₂O₃ may be introduced in the form of Al(OH)₃, it is especially effective to introduce the material in the form of AlF₃.

Further, RO or Rn₂O (here, R is at least one component selected from the group consisting of Zn, Ba, Sr, Ca and Mg, and Rn is at least one component selected from the group consisting of K, Na, Li and Cs) is a component that is effective in enhancing the meltability and stability of glass and thus may be added as desired. If the total content of these components exceeds 60 %, the stability of the glass would lower; thus, the upper limit of the content is set preferably at 60 %, more preferably at 55 % and most preferably at 40 %. Besides, in order to attain the aforementioned advantages more effectively, the lower limit of the content of these components is set preferably at 1 % and most preferably at 5 %. Of these components, BaO is the most effective in enhancing the stability and density of the glass, and it is preferable to contain BaO.

P₂O₅ is a component that may be added as desired and is effective in enhancing the stability of glass. Especially, P₂O₅ is useful for maintaining a luminescent ion Ce³⁺ in this state as will be later described. Thus, in order to attain the respective advantages to a sufficient degree, the lower limit of the content is set preferably at 0.1 % and most preferably at 1 %. Preferable upper limit of the content is 10 %, beyond which the stability of the glass would rather deteriorate. More preferable upper limit of the content is 8 %, and the most preferable upper limit of the content is 6 %.

F is a component effective in lowering the melting point of glass and enhancing the meltability and stability of glass. F can also readily serve as a reducing agent for maintaining the luminescent ion Ce³⁺ in this state as will be later described. Further, because a fluorine ion binds with a luminescent ion, F also serves to produce an effect of contributing to enhancement of a light emission characteristic. It is preferable that the content of F, intended to attain the aforementioned effects, be set as follows. Namely, the lower limit of the total amount, relative to the total amount of the components represented on the oxide basis, of F calculated on the assumption that a part or whole of oxides of the glass has been substituted by a fluoride is set preferably at 1 mol %, more preferably at 5 mol % and most preferably at 10 %, while the upper limit of the content of F is set preferably at 100 mol %, more preferably at 95 mol % and most preferably at 90 %.

In this specification, the phrase "represented on the oxide basis" is used, assuming that oxides, complex salts, metal fluorides, etc., used as raw materials of the components of the glass composition of the present invention, have all been decomposed and converted to oxides during the melting process, to refer to the manner of expressing each converted oxide in mol percent. Further, the phrase "total amount of F calculated on the assumption that a part or whole of oxides of the glass has been substituted by a fluoride" is used herein to refer to a mol % expressed by the number of moles of F when calculated as the F atom of a total content of F, which can exist in the form of one or more metal fluorides etc. in the glass composition of the present invention, relative to the total number of moles of the composition expressed on the oxide basis.

Similarly, in the case where the composition is expressed on the basis of percent by mass (or mass percent), the phrase "represented on the oxide basis" is used, assuming that oxides, complex salts, metal fluorides, etc., used as raw materials of the components of glass composition of the present invention, have all been decomposed and converted to oxides during the melting process, to refer to the manner of expressing each converted oxide in mass percent. Further, the phrase "total amount of F calculated on the assumption that a part or whole of oxides of the glass has been substituted by a fluoride" is used herein to refer to a mass % expressed by the mass of F when calculated as the F atom of a total content of F, which can exist in the form of one or more metal fluorides etc. in the glass composition of the present invention, relative to the total mass of the composition expressed on the oxide basis.

These representations pertaining to the F component are commonly called "outer percentage" in Japan.

The Ce³⁺ ion, which functions as an emission or luminescence center, is essential for achieving the scintillation property of the glass of the present invention. The Ce³⁺ ion can be introduced in the form of Ce₂O₃, CeO₂ or fluoride. In the case where the Ce³⁺ ion is introduced in the form of Ce₂O₃, the lower limit of the content of Ce₂O₃ is set preferably at 0.005 %, more preferably at 0.01 % and most preferably at 0.05 %, in order to provide a sufficient light emission intensity. However, because the light emission intensity would dramatically lower if concentration quenching occurs, the upper limit of the content of Ce₂O₃ is set preferably at 15 %, more preferably at 12 % and most preferably at 8 %.

In order to increase the light emission of the luminescent ion, it is possible to add, as sensitizers, Nd₂O₃, Pr₂O₃, Sm₂O₃, Dy₂O₃, Ho₂O₃, Er₂O₃, Tm₂O₃, Yb₂O₃, Mn₂O₃, Bi₂O₃, Cr₂O₃, etc., and it is most preferable that the maximum total amount of these components be restricted so as not to exceed 15 %; adding these sensitizers beyond 15 % would rather decrease the light emission. More preferable amount is 10% or below, and the most preferable amount is 5 mol % or below. Note that these ions may be introduced into the glass in the form of fluorides or chlorides rather than in the form of the above-mentioned oxides. Whereas cations of some of the aforementioned oxides take valences other than the above-mentioned, they are represented in terms of the aforementioned oxides in the present invention.

As₂O₃ or Sb₂O₃ is a component that functions also as a fining agent during melting of the glass or as a reducing agent to allow the above-mentioned Ce3⁺ to remain in this state, and that may be added as desired. If the total amount of either or both of these components exceeds 5%, the light emission property tends to remarkably decrease. Further, if the total amount of either or both of these components is 0.005 % or below, the achievable advantages tend to be insufficient. Thus, in order to readily achieve the advantages, the total amount of either or both of these components is set preferably to a range of 0.005 -5 %, more preferably to a range of 0.01 - 3 % and most preferably to a range of 0.01 - 2 %. Sb₂O₃ is also effective as a reducing agent and As₂O₃ is an undesirable component from an environmental viewpoint, and thus, it is preferable that As₂O₃ be not contained and Sb₂O₃ alone account for the content in any one of the aforementioned ranges.

With the glass of the present invention, each of transitional metal components having an absorption property in the visible range, such as V, Fe, Co and Ni, can not achieve a good scintillator characteristic even when it is introduced into the glass, and thus, it is preferable that such a component be not substantively contained.

Further, there has recently been a tendency to avoid use of Pb as being a harmful chemical substance, and thus, it is preferable that Pb be not contained because environmental measures are required not only in the glass making step but also in the processing and disposal after productization.

Too much content of Ga₂O₃ and GeO₂ would lower the light emission property. Further, because the raw materials of Ga₂O₃ and GeO₂ are costly, it is preferable that these components be not contained from the viewpoint of the cost as well.

In this specification, the phrase "does not substantively contain" means that one or more other components may be contained only within a range where they do not impair various properties of the glass. In order to prevent the various properties of the glass of the present invention from being impaired, it is more preferable to not artificially contain other components except where such other components are contained as impurities.

The high-density scintillating glass of the present invention can be made in the following manner. Namely, predetermined amounts of individual starting materials are weighed and mixed uniformly, after which they are put in a platinum, quartz or alumina crucible or the like and melted within an electric furnace at 1,200 - 1,550 °C for two to ten hours. After that, the resultant glass melt is poured into a mold and formed into a predetermined shape, so that a desired glass can be provided. If the glass of the present invention is made in the air, the ratio of a non-luminescent Ce⁴⁺ ion to the luminescent Ce³⁺ ion would increase, and thus, it is preferable to use a reducing agent or make the glass in a reducing atmosphere.

### [Examples]

The following paragraphs describe the present invention using various specific examples; however, it should be appreciated that the present invention is never limited to these examples.

### [Example 1]

Staring materials, SiO₂, H₃BO₃, AIFO₃, Gd₂O₃, CeO₂ and Sb₂O₃, were weighed to provide a composition of 35SiO₂-15B₂O₃-20AIFO₃-29.7Gd₂O₃-0.1Ce₂O₃-0.2Sb₂O₃ in mol percent (not on the oxide basis) and then mixed uniformly, after which they were melted in a platinum crucible at 1,370 for two hours. After that, the glass melt was cast onto a pre-heated stainless plate to thereby make a plate-shaped glass. The thus-provided glass was polished and then subjected to measurement of various properties. Strong blue light emission by Ce³⁺ was observed, with the naked eye, in both of a case where the excitation was by ultraviolet rays and a case where the excitation was by X-rays.

### [Comparative Example 1]

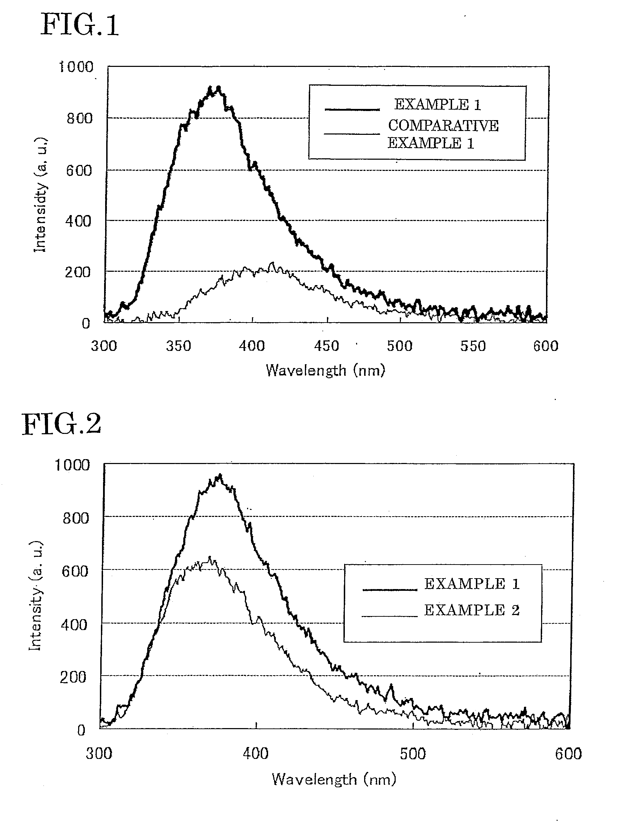

Staring materials, SiO₂, BaCO₃, MgO, Li₂CO₃, K₂CO₃, Al(OH)₃, CeO₂ and As₂O₃, were used to provide a composition of 49.58SiO₂-24.04BaO-7.81MgO-13.02Li₂O-3.3K₂O-1.5Al₂O₃-0.25Ce₂O₃-0.5As₂O₃ in mol percent. Light emission spectrum of this comparative example responsive to X-ray radiation is shown in Fig. 1 in comparison to that of Example 1. As shown, the glass of the present invention has its light emission peak located in a shorter wavelength region and scintillated with intensity two and a half times greater.

### [Example 2]

Example 2 was made with As₂O₃ substituting for Sb₂O₃ of Example 1 in order to check the reducing effect of Sb₂O₃. Examining an absorption spectrum of the glass showed that the absorption end was shifted toward a long wavelength side by more than 20 nm as compared to that of the glass of Example 1 and Ce was present in the glass mainly as a non-luminescent Ce⁴⁺. Thus, as seen from a spectrum of light emission responsive to X-ray excitation in Fig. 2, Example 1 where Sb₂O₃ was contained presented greater light emission intensity than Example 2.

### [Example 3]

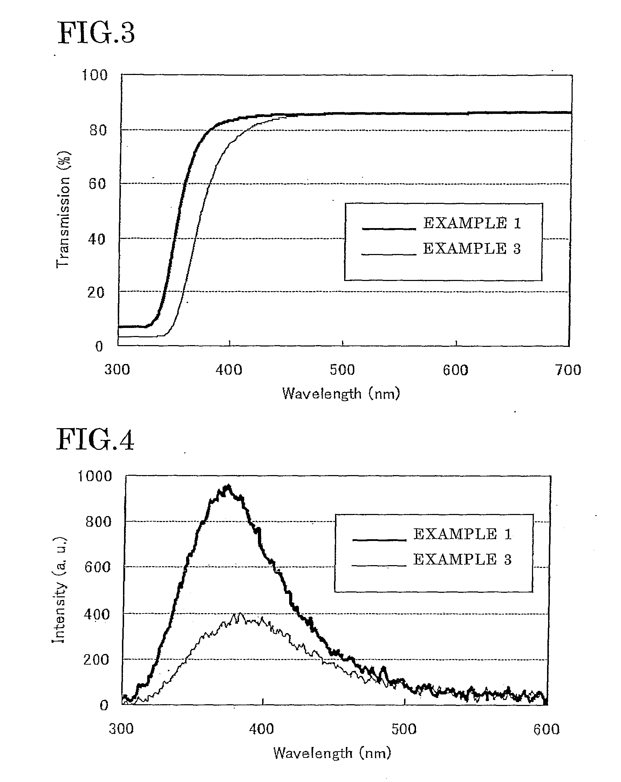

Example 3 was made with Al₂O₃ substituting for AIF₃ of Example 1 in order to check the effect of fluorine on fluorescence. By comparison between light transmissions of the two glasses (i.e., Example 1 and Example 3) shown in Fig. 3, it should be apparent that the glass containing fluorine has its absorption end located on a shorter wavelength side than the glass containing no fluorine. Further, for light emission responsive to X-ray excitation, the glass containing fluorine has its emission peak located on a shorter wavelength side by 10 nm or over than the glass containing no fluorine, and it scintillated with intensity twice as great.

### [Example 4]

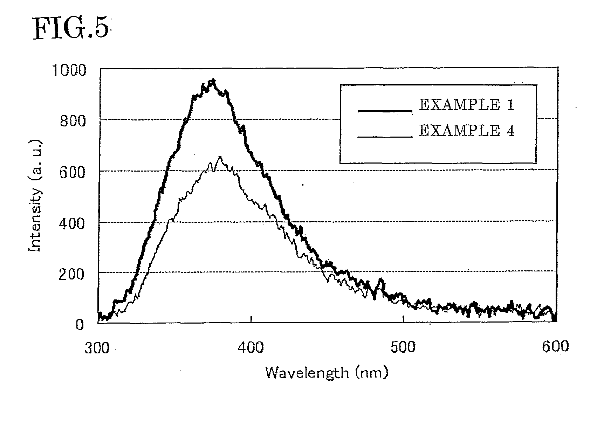

Example 4 was made in which was set a ratio of SiO₂ to B₂O₃ (SiO₂/B₂O₃) smaller than that in Example 1. Spectra of light emission of the two glasses responsive to X-ray radiation are shown in Fig. 5. Apparently, the glass having the higher "SiO₂/B₂O₃" ratio (i.e., Example 1) achieves a higher light emission efficiency and has an emission peak located on a shorter wavelength side.

### [Example 5 - Example 12]

Example 5 - Example 12 were made in a similar manner to Example 1.

Table 1 and Table 2 show glass compositions in mol percent (not on the oxide basis), densities and amounts of light emission responsive to X-ray excitation of Examples 1 - 12 and Comparative Example 1. Table 3 and Table 4 show glass compositions in mol percent on the oxide basis, densities and amounts of light emission responsive to X-ray excitation of Examples 1 - 12 and Comparative Example 1. Note that the light emission amount of the glass of the present invention was indicated as a relative value to the light emission amount of Comparative Example 1 that was assumed to be "100". From Table 1, it can be seen that the glass of the present invention has higher density and greater light yield.

**Table 1**

| mol% | Examples | | | | | |
|---|---|---|---|---|---|---|
| No. | 1 | 2 | 3 | 4 | 5 | 6 |
| SiO₂ | 35 | 35 | 35 | 15 | 35 | 35 |
| B₂O₃ | 15 | 15 | 15 | 35 | 15 | 15 |
| P₂O₅ | | | | | | |
| Al₂O₃ | | | 20 | | | |
| Gd₂O₃ | 29.7 | 29.7 | 29.7 | 29.7 | 29.65 | 29.2 |
| Lu₂O₃ | | | | | | |
| BaO | | | | | | |
| MgO | | | | | | |
| K₂O | | | | | | |
| Li₂O | | | | | | |
| AlF₃ | 20 | 20 | | 20 | 20 | 20 |
| Y₂O₃ | | | | | | |
| Ce₂O₃ | 0.1 | 0.1 | 0.1 | 0.1 | 0.25 | 0.4 |
| Sb₂O₃ | 0.2 | | 0.2 | 0.2 | 0.1 | 0.4 |
| As₂O₃ | | 0.2 | | | | |
| total | 100 | 100 | 100 | 100 | 100 | 100 |
| density (g/cm³) | 5.33 | 5.31 | 5.01 | 5.00 | 5.35 | 5.38 |
| emission peak(nm) | 375 | 375 | 385 | 380 | 375 | 375 |
| emission amount(%) | 300 | 220 | 200 | 240 | 320 | 280 |

**Table 2**

| mol% | Examples | | | | | | Comparative Examples 1 |
|---|---|---|---|---|---|---|---|
| No. | 7 | 8 | 9 | 10 | 11 | 12 | |
| SiO₂ | 35 | 35 | 35 | 35 | 54.75 | 54.77 | 49.58 |
| B₂O₃ | 15 | 15 | 15 | 13 | | | |
| P₂O₅ | | | | 2 | | | |
| Al₂O₃ | | | | | | | 1.5 |
| Gd₂O₃ | 28.5 | 19.7 | 9.7 | 30 | 6.45 | 6.45 | |
| Lu₂O₃ | | 10 | 20 | | 1.08 | 1.08 | |
| BaO | | | | 3 | 8.48 | 8.51 | 24.04 |
| MgO | | | | | 8.66 | 8.69 | 7.81 |
| K₂O | | | | | 3.71 | 3.72 | 3.3 |
| Li₂O | | | | | 14.6 | 14.35 | 13.02 |
| AlF₃ | 20 | 20 | 20 | 15 | 2.08 | 2.08 | |
| Y₂O₃ | | | | 1.7 | | | |
| Ce₂O₃ | 0.5 | 0.1 | 0.1 | 0.1 | 0.13 | 0.13 | 0.25 |
| Sb₂O₃ | 1 | 0.2 | 0.2 | 0.2 | 0.06 | | |
| As₂O₃ | | | | | | 0.22 | 0.5 |
| total | 100 | 100 | 100 | 100 | 100 | 100 | 100 |
| density (g/cm³) | 5.40 | 5.61 | 5.80 | 5.41 | 3.82 | 3.83 | 3.42 |
| emission peak(nm) | 375 | 375 | 375 | 375 | 410 | 410 | 410 |
| emission amount(%) | 150 | 300 | 300 | 220 | 120 | 120 | 100 |

**Table 3**

| mol% | Examples | | | | | |
|---|---|---|---|---|---|---|
| No. | 1 | 2 | 3 | 4 | 5 | 6 |
| SiO₂ | 38.9 | 38.9 | 35 | 16.7 | 38.9 | 38.9 |
| B₂O₃ | 16.7 | 16.7 | 15 | 38.9 | 16.7 | 16.7 |
| P₂O₅ | | | | | | |
| Al₂O₃ | 11.1 | 11.1 | 20 | 11.1 | 11.1 | 11.1 |
| Gd₂O₃ | 33.0 | 33.0 | 29.7 | 33.0 | 32.9 | 32.4 |
| Lu₂O₃ | | | | | | |
| BaO | | | | | | |
| MgO | | | | | | |
| K₂O | | | | | | |
| Li₂O | | | | | | |
| Y₂O₃ | | | | | | |
| Ce₂O₃ | 0.1 | 0.1 | 0.1 | 0.1 | 0.3 | 0.45 |
| Sb₂O₃ | 0.2 | | 0.2 | 0.2 | 0.1 | 0.45 |
| As₂O₃ | | 0.2 | | | | |
| total | 100 | 100 | 100 | 100 | 100 | 100 |
| F (outer Percentage) | 66.7 | 66.7 | | 66.7 | 66.7 | 66.7 |
| SiO₂/B₂O₃ | 2.33 | 2.33 | 2.33 | 0.43 | 2.33 | 2.33 |
| density (g/cm³) | 5.33 | 5.31 | 5.01 | 5.00 | 5.35 | 5.38 |
| emission peak(nm) | 375 | 375 | 385 | 380 | 375 | 375 |
| emission amount(%) | 300 | 220 | 200 | 240 | 320 | 280 |

**Table 4**

| mol% | Examples | | | | | | Comparative Examples 1 |
|---|---|---|---|---|---|---|---|
| No. | 7 | 8 | 9 | 10 | 11 | 12 | |
| SiO₂ | 38.9 | 38.9 | 38.9 | 37.8 | 55.3 | 55.3 | 49.58 |
| B₂O₃ | 16.7 | 16.7 | 16.7 | 14.1 | | | |
| P₂O₅ | | | | 2.2 | | | |
| Al₂O₃ | 11.1 | 11.1 | 11.1 | 8.1 | 1.05 | 1.05 | 1.5 |
| Gd₂O₃ | 31.6 | 21.9 | 10.8 | 32.5 | 6.51 | 6.5 | |
| Lu₂O₃ | | 11.1 | 22.2 | | 1.1 | 1.1 | |
| BaO | | | | 3.2 | 8.57 | 8.6 | 24.04 |
| MgO | | | | | 8.75 | 8.8 | 7.81 |
| K₂O | | | | | 3.75 | 3.8 | 3.3 |
| Li₂O | | | | | 14.78 | 14.5 | 13.02 |
| Y₂O₃ | | | | 1.8 | | | |
| Ce₂O₃ | 0.6 | 0.1 | 0.1 | 0.1 | 0.13 | 0.13 | 0.25 |
| Sb₂O₃ | 1.1 | 0.2 | 0.2 | 0.2 | 0.06 | | |
| As₂O₃ | | | | | | 0.22 | 0.5 |
| Total | 100 | 100 | 100 | 100 | 100 | 100 | 100 |
| F(outer Percentage) | 66.7 | 66.7 | 66.7 | 48.6 | 6.3 | 6.3 | |
| SiO₂/B₂O₃ | 2.33 | 2.33 | 2.33 | 2.69 | | | |
| density (g/cm³) | 5.40 | 5.61 | 5.80 | 5.41 | 3.82 | 3.83 | 3.42 |
| emission peak(nm) | 375 | 375 | 375 | 375 | 410 | 410 | 410 |
| emission amount(%) | 150 | 300 | 300 | 220 | 120 | 120 | 100 |

The glass or scintillating glass of the present invention has higher density and high light transparency from the ultraviolet region to the infrared region and scintillates in response to excitation by X-ray or other radiation. Therefore, the glass or scintillating glass of the present invention can be advantageously applicable to various devices using radioactive rays like X-rays, ultraviolet rays, etc., such as radiation counters or meters and various CT devices. Further, by virtue of its high density and high absorption factor of radioactive rays like X-rays, the glass or scintillating glass of the present invention can be advantageously used as a radiation shielding material.

## Claims

1. A glass comprising, in mol percent on an oxide basis, 0.005 % to 15 % Ce₂O₃, said glass containing none of Ga₂O₃ and GeO₂ and having a density of 3.0 g/cm³ or over.

2. A glass as defined in claim 1 which further comprises F wherein a total amount of F calculated on the assumption that a part or whole of oxides of the glass has been substituted by a fluoride is 1 to 100 mol % to a total amount of components of the glass expressed on the oxide basis.

3. A glass as claimed in claim 1 or 2 which further comprises Gd₂O₃ and/or Lu₂O₃, and wherein a content of at least one of Gd₂O₃ and Lu₂O₃ is 0.1 to 50 mol percent on the oxide basis.

4. A glass as claimed in any one of claims 1 - 3 which further comprises, in mol percent on the oxide basis, 30 % to 70 % (SiO₂ + B₂O₃) and/or 0.1 % to 35 % Al₂O₃.

5. A glass as claimed in any one of claims 1 - 4 which further comprises 0 to 10 % P₂O₅ in mol percent on the oxide basis.

6. A glass as claimed in any one of claims 1 - 5 which further comprises, in mol percent on the oxide basis, 0 to 30 % (Y₂O₃ + La₂O₃) and/or 0 to 60 % (RO + Rn₂O), and/or
0 to 5 % (As₂O₃ + Sb₂O₃),
and/or
0 to 15 % M₂O₃,
wherein R is at least one component selected from the group consisting of Mg, Ca, Sr, Ba and Zn, Rn is at least one component selected from the group consisting of Li, Na, K and Cs, and M is at least one component selected from the group consisting of Nd, Pr, Sm, Dy, Ho, Er, Tm, Yb, Mn, Bi and Cr.

7. A glass as claimed in any one of claims 1 - 6 wherein an attenuation time is 1 µs or below.

8. A glass as claimed in any one of claims 1 - 7 which emits light in response to excitation by radiation rays and is used as a scintillator.

9. A radiation meter device which uses the glass as recited in any one of claims 1 - 8.

10. A CT device which uses the glass as recited in any one of claims 1 - 8.

11. A glass making method comprising:
a step of weighing starting materials having the composition as recited in any one of claims 1 - 6;
a step of melting the starting materials into a glass melt, using a reducing agent; and
a step of pouring the glass melt into a mold to thereby form the glass melt to a desired shape.

12. A glass making method as claimed in claim 11 wherein Sb₂O₃ is used as the reducing agent.

13. A glass making method comprising:
a step of weighing starting materials having the composition as recited in any one of claims 1 - 6;
a step of melting the starting materials into a glass melt in a reducing atmosphere; and
a step of pouring the glass melt into a mold to thereby form the glass melt to a desired shape.
